# EUROPÄISCHE PATENTSCHRIFT

(11) **EP 0 577 881 B1**
(45) Veröffentlichungstag und Bekanntmachung des Hinweises auf die Patenterteilung: **28.08.1996**
(21) Anmeldenummer: 92120271.9
(22) Anmeldetag: 27.11.1992
(51) Int. Cl.: C03B 5/235

(54) **Regenerative Schmelzwanne mit verminderter NOx-Bildung**
Regenerative glass melting furnace with reduced production of NOx
Four de fusion de verre du type à régénération avec diminution de la formation de NOx

(30) Priorität: 06.06.1992 DE 4218702
(43) Veröffentlichungstag der Anmeldung: 12.01.1994
(73) Patentinhaber: Beteiligungen Sorg GmbH & Co. KG, D-97816 Lohr (DE)
(72) Erfinder: Wagner, Manfred, W-8770 Lohr/Main (DE); Sorg, Klaus, Dipl.-Ing., W-8770 Lohr/Main (DE); Pieper, Helmut, Dipl.-Ing., W-8770 Lohr/Main (DE)
(74) Vertreter: Schulze Horn, Stefan, Dipl.-Ing. M.Sc.

(56) Entgegenhaltungen:
- EP-A- 0 306 658
- EP-A- 0 335 728
- WO-A-90/04571
- US-A- 4 347 072
- US-A- 4 846 665
- GLASTECHNISCHE BERICHTE Bd. 62, Nr. 5, Mai 1989, FRANKFURT DE Seiten 151 - 157 H. BARKLAGE-HILGEFORT ET AL
- CERAMIC ENGINEERING AND SCIENCE PROCEEDINGS Bd. 5, Nr. 1/2, Februar 1984, COLUMBUS US Seiten 128 - 149 H.A. ABBASI ET AL

## Beschreibung

Die Erfindung betrifft ein Verfahren zum Betreiben eines Glasschmelzofens, bei welchem das Verbrennungsgas die Verbrennungsluft in Regeneratoren aufheizt und die Brenner beidseitig umschaltbar in zwei Ebenen angeordnet sind.

Derartige Verfahren sind seit langem bekannt und haben sich sehr bewährt. Sie weisen aber den Nachteil auf, einen relativ hohen und oft unzulässigen NOₓ-Ausstoß zu haben.

Die NOₓ-Bildung in Glasschmelzöfen wird durch die Tatsache begünstigt, daß im Flammenkern sehr hohe Temperaturen auftreten. Die hohen Temperaturen sind auf der anderen Seite aber notwendig, um entsprechende Wirkungsgrade der Wärmeübertragung und damit hohe Ofenleistungen zu erreichen.

Aus 6045 Ceramic Engineering and Science Proceedings 5(1984) Jan. - Febr., No. 1/2, Columbus, Ohio, USA ist ein Verfahren bekannt, das eine Verbrennungszone aufweist, bei der eine beschränkte Nachverbrennung eintritt. Die Gesamtverbrennung ist nicht stöchiometrisch, sondern führt zu einem Abgas mit hohem CO-Gehalt.

Es ist daher Aufgabe der Erfindung, ein Verfahren zum Betreiben eines Glasschmelzofens der eingangs genannten Art zu schaffen, das bei hoher Leistung eine relativ geringe NOₓ-Emission aufweist und das im einzelnen zwar eine hohe Energiekonzentration im Bereich des Doghauses aufweist, bei welchem aber andererseits die Flammentemperaturen im Kern erheblich abgesenkt werden.

Diese Aufgabe wird erfindungsgemäß dadurch gelöst, daß die Brenner in der einen Ebene unterstöchiometrisch und in der anderen überstöchiometrisch betrieben werden und die Brenngase in einer Mischzone einer Restverbrennung unter stöchiometrischen Bedingungen unterworfen werden.

Vorteilhaft erfolgt die unterstöchiometrische Verbrennung im Ofen oben (im Brenner) und die überstöchiometrische unten in Form einer Unterbankfeuerung.

Um einen geringen Mischimpuls zu erhalten, wird weiterhin vorteilhaft Verbrennungsgas im oberen Bereich seitlich in den Brennerhals eingeführt und um einen hohen Mischimpuls zu erreichen, erfolgt die Verbrennung im unteren Ofenbereich in Form einer Unterbankfeuerung, wobei eine starke Verwirbelung für die Einstellung der Überstöchiometrie sorgt.

Im einzelnen erfolgt die Verbrennung vorteilhaft im unteren Ofenbereich mit hohem Impuls und im oberen Bereich mit geringerem Impuls.

Durch die erfindungsgemäßen Maßnahmen kann der NOₓ-Ausstoß auch bei Regenerativ-Glasschmelzöfen erheblich gesenkt werden, ohne daß große Investitionen notwendig sind. Es kann also von einer idealen Lösung der anstehenden Probleme gesprochen werden.

Im folgenden wird ein Ausführungsbeispiel der Erfindung anhand von zwei Zeichnungen näher beschrieben. Es zeigen:

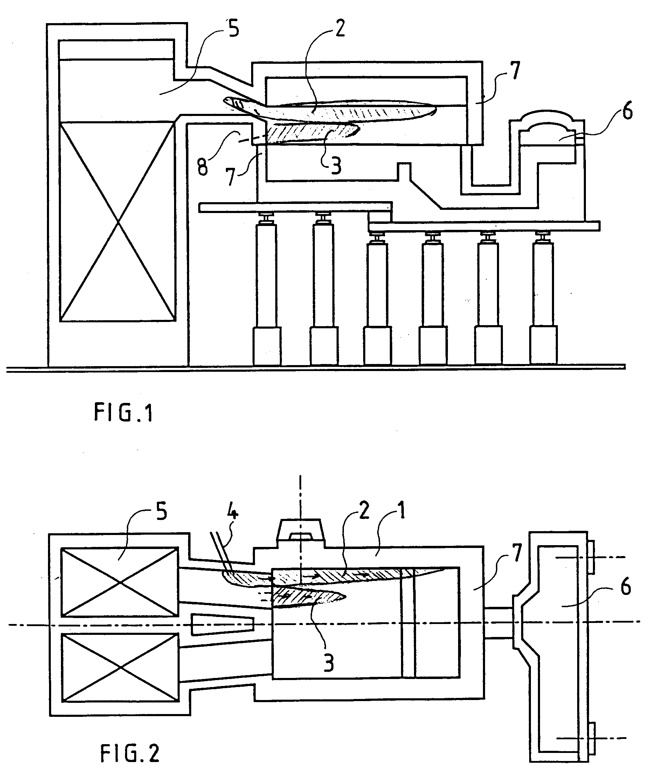

- Figur 1: einen schematischen, vertikalen Längsschnitt durch einen Glasschmelzofen und
- Figur 2: einen horizontalen Schnitt durch den Ofen gemaß Figur 1.

Gemäß den Figuren besteht der Ofen aus einer üblichen Regenerativwanne mit Längsaußenwänden 1, Querwänden 7, den Regeneratoren 5 und einer Arbeitswanne 6.

Das Verfahren gemäß Erfindung besteht darin, bei einem Regenerativ-Schmelzofen eine vorhandene Unterbankfeuerung derart mit dem seitlich eingeführten Brenner zu kombinieren, daß der Vorteil der hohen Energiekonzentration im Bereich des Doghouses nicht verloren geht, auf der anderen Seite aber die Flammentemperaturen im Kern erheblich abgesenkt werden.

Das Verfahren zum Betreiben des Ofens wird dabei so ausgeführt, daß die Geschwindigkeit im seitlich eingeführten Brenner 4 so niedrig gewählt wird, daß das Gas einen sehr geringen Mischimpuls hat und sich damit kaum mit der Luft im Brennerhals mischt. Es bildet sich damit ein Bereich 2 stark unterstöchiometrischer Verbrennung heraus, der allerdings immer entgegengesetzt der abziehenden Seite ist, so daß kein unverbranntes Gas in den abziehenden Bereich gelangen kann.

Die bestehende Unterbankfeuerung wird dabei beibehalten, wobei eine oder mehrere im Bereich der Außenwand 1 liegenden Düsen 8 abgeschaltet werden können. Die verbleibenden Brennerdüsen 8 der Unterbankfeuerung arbeiten in einem überstöchiometrischen Bereich 3, d.h. mit relativ starkem Luftüberschuß. Auch hier wird der Flammenkern durch den hohen Luftüberschuß gekühlt, so daß insgesamt eine wesentlich niedrigere NOₓ-Emission erzielt wird.

Durch diese Gestaltung kann der NOₓ-Gehalt des Abgases einer bestehenden U-Flammenwanne bei gleicher Leistung der Wanne um etwa 45% gesenkt werden, ohne die Luftzahl zu verringern.

Die Geschwindigkeiten der Unterbankfeuerung und der Feuerung in dem Brennerhals sind dabei so bemessen, daß der unterstöchiometrische Bereich und der überstöchiometrische Bereich relativ eng begrenzt sind und sich die Abgasströme im übrigen Wannenoberbau wieder vermischen, so CO-Konzentration im Abgas gemessen werden kann, d.h. insgesamt also stöchiometrische Verbrennung vorliegt.

Durch die Variation der Gasmengen der beiden Brennersysteme kann die Flammenlänge und das Energieangebot in der Wanne selbst von vorne nach hinten oder umgekehrt verschoben und damit der Belastung der Wanne angepaßt werden.

## Patentansprüche

1. Verfahren zum Betreiben eines Glasschmelzofens, bei welchem das Verbrennungsgas die Verbrennungsluft in Regeneratoren (5) aufheizt und die Brenner (4, 8) beidseitig umschaltbar in zwei Ebenen angeordnet sind,
**dadurch gekennzeichnet,**
daß die Brenner (4, 8) in der einen Ebene (2) unterstöchiometrisch und in der anderen (3) überstöchiometrisch betrieben werden und die Brenngase in einer Mischzone einer Restverbrennung unter stöchiometrischen Bedingungen unterworfen werden.

2. Verfahren nach Anspruch 1, dadurch gekennzeichnet, daß die unterstöchiometrische Verbrennung im Ofen oben und die überstöchiometrische unten erfolgt.

3. Verfahren nach Anspruch 1 oder 2, dadurch gekennzeichnet, daß das Verbrennungsgas im oberen Bereich (2) seitlich in den Brennerhals eingeführt wird.

4. Verfahren nach einem der Ansprüche 1 bis 3, dadurch gekennzeichnet, daß die Verbrennung im unteren Ofenbereich (3) in Form einer Unterbankfeuerung erfolgt.

5. Verfahren nach einem der Ansprüche 1 bis 4, dadurch gekennzeichnet, daß die Verbrennung im unteren Ofenbereich (3) mit hohem Impuls und im oberen Bereich (2) mit geringem Impuls erfolgt.

## Claims

1. Method for operating a glass melting furnace wherein the combustion gas heats the combustion air in regenerators (5), and the burners (4, 8) are mutually reversibly arranged in two levels,
**characterized in**
that the burners (4, 8) in the one level (2) are operated under-stoichiometricly and in the other level (3) are operated over-stoichiometricly, and the combustion gases are subject to a rest combustion under stoichiometric conditions in a mixing zone.

2. Method according to claim 1, characterized in that the under-stoichiometric combustion is achieved at the top of the furnace and the over-stoichiometric combustion is achieved at the bottom.

3. Method according to claim 1 or 2, characterized in that the combustion gas in the upper area (2) is laterally fed into the burner neck.

4. Method according to one of the claims 1 to 3, characterized in that the combustion in the lower area (3) of the furnace is achieved in form of an underbank-firing.

5. Method according to one of the claims 1 to 4, characterized in that the combustion in the lower area (3) of the furnace is achieved with a high pulse and in the upper area (2) with a low pulse.

## Revendications

1. Procédé destiné à opérer un four de fusion de verre, dans lequel le gaz de combustion chauffe l'air de combustion dans des régénérateurs (5) et les brûleurs (4, 8) sont disposés de part et d'autre en pouvant être commutés dans deux plans, caractérisé en ce que les conditions de fonctionnement des brûleurs (4, 8) sont inférieures aux conditions stoechiométriques dans le premier plan (2) et sont supérieures aux conditions stoechiométriques dans l'autre plan (3) et les gaz combustibles sont soumis, dans une zone de mélange, à une combustion résiduelle dans des conditions stoechiométriques.

2. Procédé selon la revendication 1, caractérisé en ce que les conditions de la combustion sont inférieures aux conditions stoechiométriques dans la partie haute du four et supérieures aux conditions stoechiométriques dans la partie basse du four.

3. Procédé selon la revendication 1 ou 2, caractérisé en ce que le gaz de combustion est introduit latéralement dans le col du brûleur dans la zone supérieure (2).

4. Procédé selon l'une des revendications 1 à 3, caractérisé en ce que la combustion s'effectue dans la zone inférieure (3) du four sous la forme d'un chauffage inférieur de l'autel.

5. Procédé selon l'une des revendications 1 à 4, caractérisé en ce que la combustion s'effectue dans une condition de quantité de mouvement élevée dans la zone inférieure (3) du four et de quantité de mouvement faible dans la zone supérieure (2).
